Europäisches Patentamt

European Patent Office

Office européen des brevets

(19)

(11) Numéro de publication: **0 390 690**
**A1**

(12) # DEMANDE DE BREVET EUROPEEN

(21) Numéro de dépôt: **90400861.2**

(22) Date de dépôt: **29.03.90**

(51) Int. Cl.5: **F16B 37/04**

(30) Priorité: **29.03.89 FR 8904080**

(43) Date de publication de la demande:
**03.10.90 Bulletin 90/40**

(84) Etats contractants désignés:
**DE ES FR GB IT NL**

(71) Demandeur: **SHUR-LOK INTERNATIONAL S.A.**
**Parc Industriel de et à**
**B-4822 Petit-Rechain(BE)**

(72) Inventeur: **Heurteux, Bernard**
**392, route de Lausanne**
**1250 Versoix(CH)**

(74) Mandataire: **Jacobson, Claude et al**
**Cabinet Lavoix 2, Place d'Estienne d'Orves**
**F-75441 Paris Cedex 09(FR)**

(54) Dispositif d'assemblage à écrou-barillet flottant.

(57) Le dispositif comporte un écrou (4) logé flottant dans un siège ménagé dans un barillet (3) de forme partiellement cylindrique et pourvu d'un trou traversant radial (10) débouchant et pourvu d'un trou permettant le passage avec jeu de la tige filetée d'une vis (6) destinée à coopérer avec ledit écrou pour l'assemblage de deux pièces (1,2). Les surfaces de portée en regard du siège et de l'écrou (4) sont aménagées de manière à former une articulation à rotule de rattrapage d'un décalage angulaire éventuel entre l'axe (13) de la vis (6) et l'axe (14) du trou traversant (10) du barillet. L'écrou (4) est sur son pourtour pourvu de moyens (23) d'immobilisation en rotation par rapport à son siège dans le barillet (3). Le dispositif comporte en outre des moyens (5) de retenue de l'écrou (4) sur le barillet ainsi qu'une paire de rondelles (7,8) de compensation de variation d'épaisseur.

FIG.2

L'invention concerne les dispositifs d'assemblage à écrou-barillet, plus particulièrement les dispositifs à écrou-barillet flottant.

Les écrou-barillets sont utilisés de façon courante, notamment dans l'aéronautique. L'écrou-barillet ayant la forme la plus simple est une pièce cylindrique munie d'un trou radial taraudé. Il est placé dans un alésage ménagé dans une première de deux pièces que l'on souhaite assembler. Cette première pièce est en outre pourvue d'un trou de vis s'étendant perpendiculairement à l'alésage et débouchant dans celui-ci.

L'autre pièce est pourvue d'un trou de vis traversant destiné à être disposé en regard du trou de vis de la première pièce pour permettre le passage d'une vis destinée à coopérer avec l'écrou-barillet afin de serrer les pièces l'une contre l'autre.

Un tel dispositif d'assemblage offre notamment l'avantage que la vis peut être vissée dans l'écrou-barillet sans qu'il soit nécessaire de tenir l'écrou, même lorsque celui-ci est pourvu d'un frein de filet puisque le barillet est immobilisé dans le plan perpendiculaire à l'axe de la vis.

Le jeu entre la vis et les trous de vis ménagés dans les deux pièces à assembler peut être important ou faible. Le défaut de centrage entre les trous de vis et le trou taraudé de l'écrou-barillet lorsque celui-ci se trouve en place dans la première pièce, doit être inférieur à ce jeu.

Or, dans le cas où les deux pièces assemblées sont soumises à des efforts perpendiculaires à l'axe de la vis, c'est-à-dire à un cisaillement, il est important que le jeu entre la vis et les trous de vis soit aussi faible que possible.

Afin de permettre, dans le cas où ce jeu est minimal, un certain défaut de centrage entre les trous de vis et le trou taraudé de l'écrou-barillet ou autrement dit un défaut de coaxialité entre l'axe de la vis et l'axe du trou taraudé, on a recours à un organe de centrage de l'écrou-barillet dans l'alésage lui servant de logement dans la première pièce.

Cet organe de centrage, qui est en même temps un organe de maintien du barillet dans une position centrée par rapport aux trous de vis, peut être constitué par une feuille ou lame en acier à ressort qui est conformé de façon à présenter des premiers moyens coopérant avec l'écrou-barillet lui-même et des seconds moyens adaptés pour coopérer élastiquement avec le prolongement du trou de vis perpendiculaire à l'axe de l'alésage dans lequel doit être logé l'écrou-barillet. Cet organe de centrage peut aussi être constitué d'un ressort à fil disposé autour d'un bossage aménagé autour du trou taraudé de l'écrou-barillet afin de coopérer avec ledit prolongement lors de la mise en place de l'écrou-barillet.

On peut ainsi disposer préalablement l'écrou-barillet en place dans son alésage de réception et l'organe élastique de centrage maintient ensuite le corps de l'écrou-barillet en position centrée sur le trou de vis débouchant dans l'alésage.

On connaît aussi des dispositifs d'assemblage de ce type comportant un écrou flottant logé dans un siège ménagé dans le barillet et relié à celui-ci par des goupilles de guidage. Le barillet est pourvu d'une lumière circulaire permettant le passage avec jeu de la vis pour coopérer avec l'écrou qui peut être décalé par translation le long de l'axe du barillet afin de rattraper un défaut de centrage entre l'axe du trou taraudé de l'écrou et l'axe de la vis.

Le dispositif comportant un écrou logé flottant dans un barillet ne résoud pourtant pas le problème associé à un défaut de perpendicularité de l'axe de l'alésage de réception du barillet par rapport à l'axe des trous de vis. En effet, si ce défaut de perpendicularité est important, l'utilisation d'un barillet à écrou flottant entraîne un couple de flexion sur la vis. Les efforts de flexion ainsi imposés à la vis provoquent une détérioration de la résistance à la fatigue de celle-ci.

On connaît aussi un dispositif comportant un barillet à écrou flottant dans lequel le barillet et l'écrou sont conçus de façon à diminuer les efforts de flexion lorsque, dans un plan longitudinal du barillet, il y a ce défaut de perpendicularité entre l'alésage de réception du barillet et les trous de vis. A cet effet le siège ménagé dans le barillet a une forme partiellement cylindrique pour coopérer avec la face d'appui de l'écrou, également cylindrique. La surface cylindrique du barillet est plus grande que celle de l'écrou de sorte que l'écrou peut être décalé longitudinalement par rapport au barillet afin d'incliner l'axe de l'écrou pour rattraper ledit défaut de perpendicularité dans ledit plan longitudinal du barillet.

Ce dispositif présente toutefois l'inconvénient que lors du vissage de la vis dans l'écrou, celui-ci à tendance à tourner par rapport au barillet, ce qui est tout-à-fait inévitable si un frein de filet est incorporé dans le trou taraudé de l'écrou. Cela a pour conséquence que la surface d'appui de l'écrou ne porte pas sur le siège dans le barillet de façon satisfaisante et ceci entraîne des contraintes supplémentaires dans la vis et dans l'écrou.

Le but de l'invention est de proposer un dispositif d'assemblage à écrou-barillet assurant un contact optimal entre l'écrou et le barillet lorsque la vis se trouve en prise avec l'écrou et un rattrapage, dans tous les plans, d'un défaut de perpendicularité éventuel des trous de passage de vis par rapport à l'alésage de réception du barillet.

L'invention a pour objet un dispositif d'assemblage à barillet-écrou, comportant un écrou logé flottant dans un siège ménagé dans un barillet de forme partiellement cylindrique et pourvu d'un trou traversant radial débouchant dans le siège et permettant le passage avec jeu de la tige filetée d'une vis destinée à coopérer avec ledit écrou pour l'assemblage de deux pièces, càractérisé en ce que les surfaces de portée en regard du siège et de l'écrou sont aménagées de manière à former une articulation à rotule de rattrapage d'un décalage angulaire éventuel entre l'axe de la vis et l'axe du trou traversant du barillet, et en ce que l'écrou est sur son pourtour pourvu de moyens d'immobilisation en rotation par rapport à son siège dans le barillet.

Selon d'autres caractéristiques de l'invention :

- l'écrou a une forme générale cylindrique, lesdits moyens d'immobilisation comportant au moins deux ergots radiaux diamètralement opposés et coopérant avec des rainures ménagées dans le barillet autour du siège ;

- la profondeur des rainures du barillet est telle qu'une course libre soit ménagée entre les ergots et le fond des rainures lorsque l'axe de l'écrou est perpendiculaire à l'axe du barillet, cette course libre permettant un léger pivotement de l'écrou dans le plan des ergots sans qu'il cesse d'être immobilisé en rotation ;

- des moyens de retenue sont prévus pour retenir l'écrou sur son siège dans le barillet, lesdits moyens comprenant un fil métallique élastique cintré de façon à former d'une part une boucle et d'autre part un arc s'étendant dans un plan perpendiculaire au plan de la boucle, le siège comportant une partie cylindrique constituant une surface de portée coopérant avec ladite boucle des moyens de retenue ;

- une paire de rondelles est prévue pour être enfilées sur la tige de la vis entre la surface de portée de la tête de la vis et la face extérieure de l'une des pièces à assembler, la première rondelle ayant une face d'appui plane destinée à être appliquée contre la surface extérieure de ladite pièce et une face convexe en forme de zone sphèrique coopérant avec une face concave complémentaire de la seconde rondelle, l'autre face d'appui de la seconde rondelle étant plane afin d'être appliquée contre la surface de portée de la tête de la vis, l'orifice des rondelles ayant un diamètre supérieur à celui de la vis de manière à ménager un jeu entre eux permettant un décalage axial des rondelles l'une par rapport à l'autre afin de faire varier l'épaisseur totale des rondelles radialement autour de la vis.

L'invention sera maintenant décrite plus en détail en référence au dessin annexé sur lequel :

- la Fig.1 est une vue en coupe longitudinale d'un dispositif d'assemblage suivant l'invention montrant deux pièces maintenues ensemble à l'aide de ce dispositif, l'alésage de réception de l'écrou- barillet étant montré en coupe transversale ;

- la Fig.2 est une vue en coupe longitudinale à 90° de la Fig.1 montrant ainsi l'alésage de réception en coupe longitudinale ;

- la Fig.3 est une coupe transversale de l'écrou-barillet suivant la ligne 3-3 de la Fig.1 ;

- la Fig.4 est une vue en perspective d'un barillet suivant l'invention ;

- les Fig.5 à 7 sont des vues respectivement en élévation latérale dans deux plans orthogonaux et en plan d'un organe de retenue de l'écrou sur le barillet.

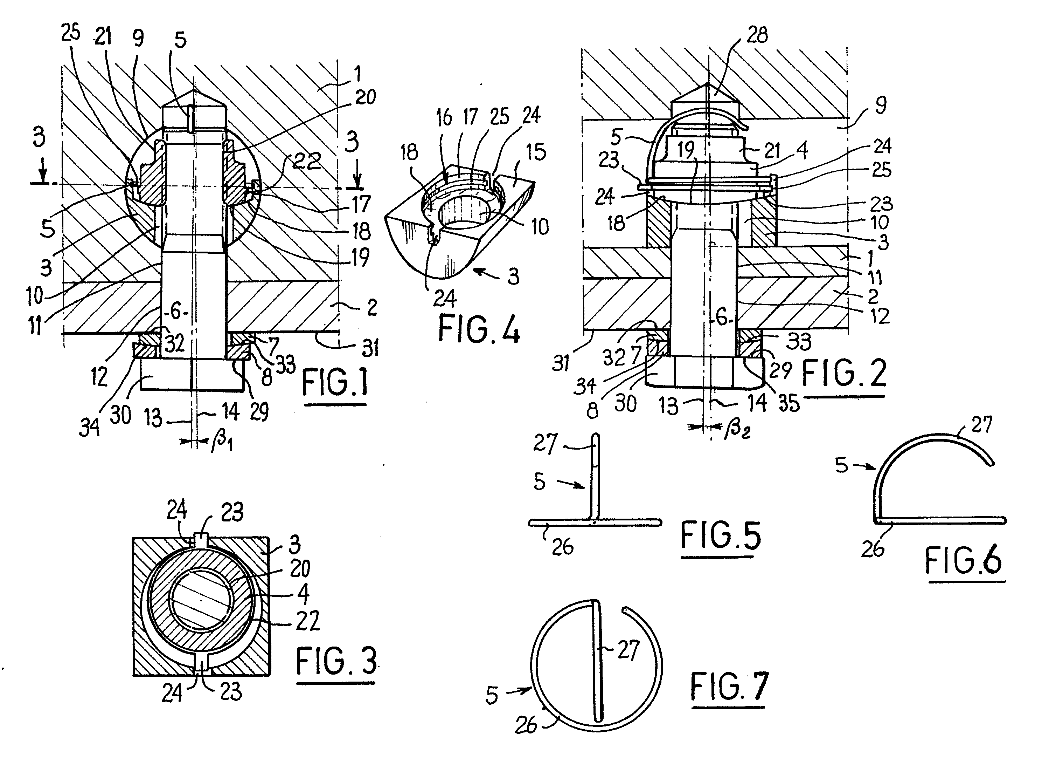

Les Fig.1 et 2 montrent une première pièce 1 assemblée à une deuxième pièce 2 à l'aide d'un dispositif d'assemblage suivant l'invention. Le dispositif d'assemblage comporte dans le mode de réalisation illustré sur ces figures un barillet 3, un écrou 4, des moyens de retenue 5 de l'écrou sur le barillet, une vis 6 et des rondelles 7, 8.

Le barillet 3 avec l'écrou 4 est disposé dans un alésage de réception 9 ménagé dans la première pièce 1 et s'étendant parallèlement à l'une des faces de celle-ci.

Le barillet 3 a une forme générale hémi-cylindrique et comporte une lumière radiale circulaire ayant un diamètre supérieur à celui de la vis 6 de sorte que celle-ci traverse avec un jeu le barillet. La lumière radiale 10 est amenée en regard d'un trou de vis 11 ménagé dans la première pièce et débouchant dans l'alésage 9. Le trou 11 est aligné avec un trou de vis traversant 12 ménagé dans la deuxième pièce 2 pour permettre le passage de la vis 6 qui coopère avec l'écrou 4 à travers la lumière 10 du barillet 3. Les trous 11, 12 de passage de vis ont un diamètre légè rement supérieur à celui de la vis 6 pour laisser un jeu minimal entre ses parois et la vis, ce qui est souhaitable lorsque les pièces 1, 2 sont soumises à des forces dirigées perpendiculairement à l'axe de la vis ou à des forces de cisaillement.

Etant donné que ce jeu est minimal, les trous de vis 11 et 12 sont nécessairement à peu près coaxiaux l'un par rapport à l'autre, mais ils peuvent présenter, comme illustré sur les Fig.1 et 2, un défaut de perpendicularité par rapport à l'alésage 9. Ce défaut de perpendicularité correspond à un décalage angulaire entre l'axe 13 de la vis et l'axe 14 de la lumière 10 du barillet 3. Dans le plan de coupe de la Fig.1, ce décalage angulaire est référencé $\beta$ 1 et dans le plan de coupe de la Fig.2 il est référencé $\beta$ 2.

Le barillet 3 comporte une surface plane longitudinale 15 s'étendant perpendiculairement à la lumière 10 du barillet. Un évidement 16 formant siège pour l'écrou 4 est ménagé dans la surface plane 15 autour de la lumière 10. Le siège comporte une partie cylindrique 17 adjacente à la surface plane et une partie en forme de zone sphérique 18 dans laquelle débouche la lumière 10.

L'écrou a une forme générale cylindrique et l'une de ses faces d'extrémité a une forme de zone sphérique 19 disposée autour de son trou taraudé 20. La zone sphérique 19 est complémentaire de la zone sphérique 18 du barillet 3 afin de coopérer avec celle-ci. Ces deux surfaces sphériques définissent une rotule de rattrapage du décalage angulaire entre l'axe 13 de la vis 6 et l'axe 14 de la lumière 10, ce décalage étant une conséquence du défaut de perpendicularité, illustré sur les figures 1 et 2, entre les trous de vis 11, 12 et l'alésage de réception 9 du barillet 3.

L'écrou est sur une partie de sa longueur à proximité de son extrémité opposée à la zone sphérique 19 aminci afin de former un collet axial 21 autour du trou taraudé 20. Le collet 21 est déformé elliptiquement afin de constituer un frein de filet pour la vis 6.

L'écrou 4 comporte en outre une collerette 22 et deux ergots radiaux 23 diamétralement opposés faisant saillie de la collerette. Les ergots 23 forment des moyens d'immobilisation en rotation de l'écrou par rapport au barillet 3 et coopèrent avec des rainures 24 ménagées dans la face longitudinale plane 15 de celui-ci, chaque rainure étant disposée de façon à relier l'évidement 16 formant siège avec une face d'extrémité correspondante du barillet.

La profondeur des rainures 24 du barillet est telle qu'une course libre soit ménagée entre les ergots 23 et le fond des rainures lorsque l'axe de l'écrou est perpendiculaire à l'axe du barillet, ce qui permet un léger pivotement de l'écrou dans son siège 16 sans qu'il cesse d'être immobilisé en rotation.

La collerette 22 coopère avec les moyens de retenue 5 de l'écrou et limite en même temps l'angle de pivotement de celui-ci.

La partie cylindrique 17 du siège 16 comporte dans l'exemple illustré sur les figures une gorge 25 coopérant avec les moyens de retenue 5 de l'écrou 4 sur le barillet 3.

Les moyens de retenue 5 comportent un fil métallique élastique cintrée de façon à former d'une part une boucle 26 et d'autre part un arc 27 s'étendant dans un plan perpendiculaire au plan de la boucle 26.

La boucle 26 est logée dans la gorge 25 du barillet 3 et l'arc 27 s'étend au-dessus de l'écrou 4. L'écrou est retenu en place sur son siège dans le barillet 3 par la boucle 26 qui coopère, comme déjà mentionné, avec la collerette 22 de l'écrou.

La gorge 25 du barillet 3 n'est pas nécessaire si la force de tension dans la boucle est suffisamment importante pour maintenir celle-ci fermement en place en la sollicitant contre la partie cylindrique 17 du siège 16. La présence de cette gorge 25 est pourtant très avantageuse pour le positionnement de la boucle 26 lors de l'assemblage de l'ensemble écrou-barillet.

Le trou de vis 11 est avantageusement prolongé au-delà de l'alésage de logement 9 pour former un évidement 28 coopérant avec l'arc 27 des moyens de retenue 5 afin de centrer le barillet 3 par rapport au trou de vis 11 et en même temps maintenir l'ensemble écrou-barillet en place dans cette position centrée.

Dans le cas où la surface de portée 29 de la tête 30 de la vis ne s'étend pas parallèlement à la surface extérieure 31 de la deuxième pièce 2 du fait que les trous de vis 11, 12 ne sont pas parfaitement perpendiculaires à cette surface 31, il est souhaitable de rattraper ce décalage angulaire afin d'éviter une détérioration de la résistance à la fatigue de la vis.

Le décalage angulaire illustré sur les figures 1 et 2 est rattrapé à l'aide de la paire de rondelles 7 et 8 qui sont des rondelles de compensation de variation d'épaisseur. Elles comprennent une première rondelle 7 ayant une face d'appui plane 32 appliquée contre la surface extérieure 31 de la pièce 2 et une face convexe 33 en forme de zone sphérique coopérant avec une face concave complémentaire 34 d'une seconde rondelle 8. L'autre face d'appui 35 de la seconde rondelle 8 est plane et est appliquée contre la surface de portée 29 de la vis 6.

L'orifice des rondelles 7, 8 a un diamètre supérieur à celui de la vis 6 de sorte qu'un jeu est aménagé entre l'orifice des rondelles et la vis. Ce jeu permet un décalage des axes des rondelles l'un par rapport à l'autre afin de faire varier l'épaisseur totale des rondelles radialement autour de la vis de sorte qu'un décalage angulaire de la surface de portée 29 de la vis 6 par rapport à la surface extérieure 31 de la deuxième pièce 2 soit compensée.

La mise en place du dispositif d'assemblage suivant l'invention est simple. L'écrou 4 est retenu en place sur le barillet à l'aide des moyens de retenue 5 et l'ensemble écrou-barillet est introduit dans l'alésage 9. L'arc 27 des moyens de retenue 5 est lors de l'introduction sollicité vers l'écrou 4 par la paroi de l'alésage 9 jusqu'au moment où il vient en regard de l'évidement formé par le prolongement du trou de vis 11. A cet endroit, l'arc 27 est libéré et sollicité élastiquement vers cet évidement afin de coopérer avec celui-ci par encliquetage pour le centrage de l'ensemble écrou-barillet et pour le maintien en place de l'ensemble dans cette position. L'ensemble écrou-barillet peut ainsi facilement être mis en place dans un alésage, même lorsque celui-ci est disposé verticalement.

Ensuite, on introduit la vis 6, qui peut être une vis standard, à travers les trous de vis 11, 12 jusqu'à ce qu'elle vienne au contact de l'écrou 4. A ce moment ce produit automatiquement un centrage de l'écrou 4 par rapport à la vis 6 de sorte que l'axe de l'écrou coïncide avec l'axe de la vis. S'il existe un décalage angulaire entre l'axe de la vis et l'axe de la lumière 10 du barillet, l'écrou est amené à pivoter légèrement sur le siège afin de rattraper ledit décalage. Si ce décalage angulaire résulte d'un défaut de perpendicularité des trous de vis 11, 12 par rapport à la surface extérieure 31 de la pièce 2, il est préférable d'interposer une paire de rondelles 7, 8 de compensation de variation d'épaisseur entre la surface de portée 29 de la vis 6 et ladite surface.

On visse ensuite la vis 6 dans l'écrou 4 jusqu'à l'obtention du moment de serrage voulu. Grâce à l'invention, l'effort de serrage est réparti uniformément autour de la tige de la vis et on évite ainsi une détérioration de la résistance à la fatigue de la vis.

**Revendications**

1. Dispositif d'assemblage à écrou-barillet, comportant un écrou (4) logé flottant dans un siège (16) ménagé dans un barillet (3) de forme partiellement cylindrique et pourvu d'un trou traversant radial (10) débouchant dans le siège (16) et permettant le passage avec jeu de la tige filetée d'une vis (6) destinée à coopérer avec ledit écrou pour l'assemblage de deux pièces (1,2), caractérisé en ce que les surfaces de portée en regard du siège (16) et de l'écrou (4) sont aménagées de manière à former une articulation à rotule de rattrapage d'un décalage angulaire éventuel entre l'axe (13) de la vis (6) et l'axe (14) du trou traversant (10) du barillet (3), et en ce que l'écrou est sur son pourtour pourvu de moyens d'immobilisation en rotation par rapport à son siège (16) dans le barillet (3).

2. Dispositif d'assemblage suivant la revendication 1, dans lequel l'écrou a une forme générale cylindrique, caractérisé en ce que lesdits moyens d'immobilisation comportent au moins deux ergots radiaux (23) diamétralement opposés et coopérant avec des rainures (24) ménagées dans le barillet (3) autour du siège (16).

3. Dispositif d'assemblage suivant la revendication 2, caractérisé en ce que la profondeur des rainures (24) du barillet (3) est telle qu'une course libre soit ménagée entre les ergots (23) et le fond des rainures (24) lorsque l'axe de l'écrou (4) est perpendiculaire à l'axe du barillet (3), cette course libre permettant un léger pivotement de l'écrou dans le plan des ergots sans qu'il cesse d'être immobilisé en rotation.

4. Dispositif d'assemblage suivant l'une quelconque des revendications précédentes, dans lequel sont prévus des moyens de retenue de l'écrou (4) sur son siège (16) dans le barillet (3), caractérisé en ce que lesdits moyens (5) comprennent un fil métallique élastique cintré de façon à former d'une part une boucle (26) et d'autre part un arc (27) s'étendant dans un plan perpendiculaire au plan de la boucle et en ce que le siège (16) comporte une partie cylindrique (17) constituant une surface de portée coopérant avec ladite boucle (26) des moyens de retenue (5).

5. Dispositif d'assemblage suivant la revendication 4, caractérisé en ce qu'une gorge (25) est ménagée dans la partie cylindrique (17) du siège (16) et que la boucle (26) des moyens de retenue (5) est logée dans ladite gorge.

6. Dispositif d'assemblage suivant la revendication 4 ou 5, caractérisé en ce que l'écrou (4) est pourvu d'une collerette (22) coopérant avec la boucle (26) des moyens de retenue (5) afin de retenir l'écrou (4) sur le siège (16) et limiter l'angle du pivotement de l'écrou.

7. Dispositif d'assemblage suivant l'une quelconque des revendications 4 à 6, caractérisé en ce que l'arc (27) des moyens de retenue (5) constitue un organe de centrage de l'ensemble barillet-écrou destiné à être actionné lors de la mise en place du dispositif dans l'une des pièces à assembler.

8. Dispositif d'assemblage suivant l'une quelconque des revendications précédentes, dans lequel est prévu une paire de rondelles (7,8) pour être enfilées sur la tige de la vis (6) entre la surface de portée (35) de la tête (30) de la vis (6) et la face extérieure (31) de l'une (2) des pièces à assembler, caractérisé en ce que la première rondelle (7) a une face d'appui plane (32) destinée à être appliquée contre la surface extérieure (31) de ladite pièce (2) et une face convexe (33) en forme de zone sphèrique coopérant avec une face concave complémentaire (34) de la seconde rondelle (8), l'autre face d'appui (35) de la seconde rondelle (8) étant plane afin d'être appliquée contre la surface de portée (29) de la tête de la vis (6), et en ce que l'orifice des rondelles (7, 8) a un diamètre supérieur à celui de la vis (6) de manière à ménager un jeu entre eux permettant un décalage axial des rondelles l'une par rapport à l'autre afin de faire varier l'épaisseur totale des rondelles radialement autour de la vis.

FIG.1

FIG.4

FIG.3

FIG.2

FIG.5

FIG.6

FIG.7

EP 0 390 690 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4119130 (BERECZ)<br>* revendication 1; figure 1 *<br>--- | 1 | F16B37/04 |
| P,A | US-A-4861207 (TAI H.DO)<br>* figure 1 *<br>------ | 1 | |

**DOMAINES TECHNIQUES RECHERCHES (Int. Cl.5 )**

F16B

Le présent rapport a été établi pour toutes les revendications

| Lieu de la recherche | Date d'achèvement de la recherche | Examinateur |
|---|---|---|
| BERLIN | 06 JUILLET 1990 | SCHAEFFLER C.A.A. |

**CATEGORIE DES DOCUMENTS CITES**

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................
& : membre de la même famille, document correspondant

EPO FORM 1503 03.82 (P0402)